# FASCICULE DE BREVET EUROPEEN

(11) **EP 3 986 790 B1**
(45) Date de publication et mention de la délivrance du brevet: **12.03.2025**
(21) Numéro de dépôt: 20758273.5
(22) Date de dépôt: 06.08.2020
(51) Int. Cl.: B64D 45/00, B64D 47/08, G07C 5/08, H04N 7/18

(54) **PROCÉDÉ DE SURVEILLANCE, PRODUIT PROGRAMME D'ORDINATEUR, SYSTÈME DE SURVEILLANCE ET AERONEF ASSOCIÉS**
ÜBERWACHUNGSPROZESS, COMPUTERPROGRAMM, ZUGEHÖRIGES ÜBERWACHUNGSSYSTEM UND FLUGZEUG
SURVEILLANCE PROCESS, COMPUTER PROGRAM, ASSOCIATED SURVEILLANCE SYSTEM AND AIRCRAFT

(30) Priorité: 07.08.2019 FR 1909040
(43) Date de publication de la demande: 27.04.2022
(73) Titulaire: SAFRAN AIRCRAFT ENGINES, 75015 Paris (FR)
(72) Inventeur: COUPARD, Josselin Xavier, 77550 MOISSY-CRAMAYEL (FR); VERRIER, Alrick Patrick Michel Jacques, 77550 MOISSY-CRAMAYEL (FR)
(74) Mandataire: Brevalex
(86) Numéro de dépôt international: PCT/FR2020/051442
(87) Numéro de publication internationale: WO 2021/023950

(56) Documents cités:
- EP-A1- 3 216 702
- EP-A1- 3 403 938
- EP-A2- 3 306 293
- US-A1- 2009 309 762
- US-A1- 2013 114 878
- US-A1- 2013 213 141
- US-A1- 2018 079 533
- US-A1- 2018 194 487

## Description

### DOMAINE TECHNIQUE

La présente invention concerne un procédé de surveillance d'un organe d'un aéronef.

L'invention concerne également un produit programme d'ordinateur, un système de surveillance et un aéronef embarquant un tel système de surveillance.

L'invention s'applique au domaine de la surveillance d'organes d'aéronefs, en particulier à la détection d'anomalies touchant lesdits organes.

### ÉTAT DE LA TECHNIQUE ANTÉRIEURE

Il est connu d'équiper des aéronefs avec des caméras destinées à fournir, dans le cockpit, des flux vidéo d'organes à surveiller, par exemple un moteur ou un train d'atterrissage. De telles images sont susceptibles de permettre à l'équipage de détecter des anomalies.

Toutefois, de tels systèmes ne donnent pas entière satisfaction.

En effet, l'interprétation de telles images requiert une très grande expertise afin de détecter et caractériser la gravité d'une éventuelle anomalie.

Parmi de telles anomalies, il est possible de citer : le dysfonctionnement d'un moteur (fuite d'huile et/ou de carburant, arrêt du moteur suite à l'extinction de la chambre de combustion, dit « *flame out* », fumées, flammes, etc.), le dysfonctionnement d'un organe de la nacelle (inverseur de poussée, par exemple), le dysfonctionnement des commandes de vols ou des trains d'atterrissage, ou encore un impact suite à l'ingestion d'un corps étranger.

En outre, de tels systèmes ne sont pas satisfaisants dans la mesure où ils requièrent une surveillance continue de la part de l'équipage (surveillance manuelle ou précisément à l'œil), ce qui n'est pas possible. Il en résulte la possibilité de ne pas détecter l'occurrence d'un problème du moteur, du train d'atterrissage, de l'inverseur de poussée, etc.

Un but de l'invention est donc de proposer un système de surveillance qui permette une détection et une analyse plus simples et plus efficaces d'anomalies touchant un organe surveillé d'un aéronef, et qui ne nécessite pas une intervention permanente de la part de l'équipage. Un système de surveillance de l'art antérieur est divulgué par EP 3306293 A2 et US 2013213141 A1.

### EXPOSÉ DE L'INVENTION

A cet effet, l'invention a pour objet un procédé tel que défini dans la revendication 1.

En effet, grâce à l'élaboration d'une signature à partir d'au moins une image d'intérêt du flux vidéo, le procédé selon l'invention autorise une détection et une analyse d'anomalie qui ne dépend pas de l'expertise d'un opérateur. En outre, le recours à une bibliothèque de signatures confère une grande souplesse au procédé de surveillance, dans la mesure où la détection de nouvelles anomalies est susceptible d'être mise en œuvre simplement et rapidement par l'enregistrement des nouvelles signatures correspondantes.

Suivant d'autres aspects avantageux de l'invention, le procédé comporte une ou plusieurs des caractéristiques suivantes, prise(s) isolément ou suivant toutes les combinaisons techniquement possibles :
- l'étape d'identification comprend un prétraitement destiné à rejeter des images extrapolées du flux vidéo ;
- le procédé de surveillance comprend, en outre, un diagnostic, à partir du flux vidéo, du dispositif d'acquisition vidéo ;
- le diagnostic du dispositif d'acquisition vidéo comprend :
   - la sélection d'au moins deux images témoins du flux vidéo, séparées dans le temps par une durée prédéterminée ; et
   - l'évaluation, à partir du résultat de la comparaison des au moins deux images témoins, d'un niveau de qualité et/ou d'une défaillance du dispositif d'acquisition vidéo.

En outre, l'invention a pour objet un produit programme d'ordinateur tel que défini dans la revendication 6.

En outre, l'invention a pour objet un système de surveillance tel que défini dans la revendication 5.

En outre, l'invention a pour objet un aéronef embarquant un système de surveillance tel que défini ci-dessus.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 est une représentation schématique d'un système de surveillance selon l'invention ; et
- la figure 2 est un ordinogramme du déroulement du procédé de surveillance mis en œuvre par le système de surveillance de la figure 1.

### EXPOSÉ DÉTAILLÉ DE MODES DE RÉALISATION PARTICULIERS

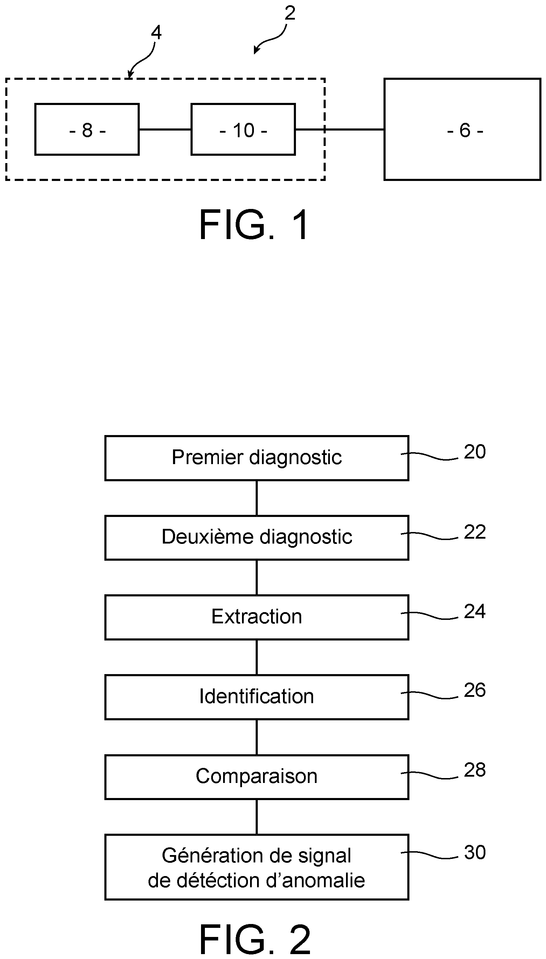

Un système de surveillance 2 selon l'invention, embarqué à bord d'un aéronef (non représenté), est illustré par la figure 1.

Le système de surveillance 2 comprend au moins un dispositif d'acquisition vidéo 4 et un dispositif de traitement 6.

Chaque dispositif d'acquisition vidéo 4 est configuré pour générer un flux vidéo représentatif d'au moins une partie d'un organe de l'aéronef associé au dispositif d'acquisition, dit « organe surveillé ». En outre, le dispositif de traitement 6 est configuré pour traiter chaque flux vidéo et pour délivrer, le cas échéant, un signal de détection représentatif de la détection d'une anomalie au niveau d'un organe surveillé.

L'organe surveillé est, par exemple, un moteur, une nacelle, un volet, un train d'atterrissage, un actionneur ou encore une pièce mécanique des commandes de vol de l'aéronef.

Chaque dispositif d'acquisition vidéo 4 comporte une caméra 8 et une chaîne d'acquisition 10, la caméra étant disposée, à bord de l'aéronef, en fonction de l'organe surveillé.

La caméra 8 est agencée, à bord de l'aéronef, de sorte que son champ de vision intercepte au moins une partie de l'organe surveillé.

Par exemple, la caméra 8 est agencée, à bord de l'aéronef, de sorte que son champ de vision intercepte la partie arrière d'un moteur ou d'une nacelle, ou encore des becs ou des volets. Selon un autre exemple, la caméra 8 est agencée, à bord de l'aéronef, de sorte que son champ de vision intercepte la partie avant d'un moteur ou d'une nacelle, en particulier des aubes du moteur. Selon encore un autre exemple, la caméra 8 est agencée, à bord de l'aéronef, de sorte que son champ de vision intercepte l'intérieur d'une nacelle ou d'un moteur.

De façon classique, la caméra 8 est configurée pour générer un signal électrique représentatif des éléments détectés dans son champ de vision, la chaîne d'acquisition 10 étant configurée pour délivrer, au cours du temps, le flux vidéo représentatif de chaque partie de l'organe surveillé correspondant.

L'organe surveillé est associé à au moins un capteur configuré pour générer, au cours du temps, un signal de mesure représentatif d'un fonctionnement de l'organe surveillé, la chaîne d'acquisition 10 est configurée pour synchroniser, avec chaque signal de mesure, le flux vidéo qu'elle délivre.

Le dispositif de traitement 6 est configuré pour recevoir le flux vidéo et pour en extraire, en cas de détection de la réalisation d'une condition prédéterminée, une partie du flux vidéo pour former une séquence d'intérêt.

Cette condition prédéterminée est la détection d'une anomalie dans le signal de mesure généré par au moins un capteur.

En variante, une telle condition prédéterminée est, par exemple, la présence de l'aéronef dans une phase prédéterminée, telle qu'une phase d'arrêt au sol, une phase de roulage (encore désignée sous l'appellation anglais « *taxiing »),* une phase de décollage, une phase de croisière, ou encore une phase d'atterrissage.

Le dispositif de traitement 6 est également configuré pour identifier, dans la séquence d'intérêt extraite, au moins une image d'intérêt.

De façon avantageuse, si la chaîne d'acquisition 10 est configurée de sorte que le flux vidéo qu'elle délivre est un flux vidéo compressé, le dispositif de traitement 6 est configuré pour mettre en œuvre un prétraitement de chaque séquence d'intérêt extraite pour écarter, c'est-à-dire rejeter, des images du flux vidéo obtenues par extrapolation.

Par exemple, un tel prétraitement consiste à rejeter les images dites à codage prédictif image inter (c'est-à-dire des images à codage prédictif ou encore des images à codage prédictif bidirectionnel), qui sont des images extrapolées à partir d'images dites à codage interne (ou encore « images intra », ou « images de référence »). De telles appellations sont couramment utilisées dans le domaine du codage vidéo, en référence à des structures dites « groupe d'images » (ou encore GOP, de l'anglais « *group of pictures* »). Par conséquent, les images d'intérêt sont des images intra.

A titre d'exemple, dans le cas où le flux vidéo est obtenu par codage selon la norme H.264, les images de référence, susceptibles de constituer des images d'intérêts, présentent une fréquence d'une image sur quatre dans le flux vidéo, deux images de référence successives étant séparées par trois images à codage prédictif, qui seront rejetées par le dispositif de traitement 6 lors de l'exécution du prétraitement.

Le prétraitement décrit ci-dessus est avantageux, dans la mesure où les images à codage prédictif, qui sont des images extrapolées à partir des images intra, sont susceptibles d'engendrer de l'imprécision et/ou des mauvaises interprétations dans la mise en œuvre du procédé de surveillance selon l'invention.

Le dispositif de traitement 6 est, en outre, configuré pour générer, à partir d'au moins une image d'intérêt identifiée, une signature correspondante.

De préférence, pour la génération d'une telle signature, le dispositif de traitement 6 est configuré pour appliquer, à chaque image d'intérêt, un conditionnement prédéterminé.

Un tel conditionnement comprend, par exemple, un filtrage et/ou un ajustement de contraste et/ou un ajustement de couleurs et/ou une détection de contours.

Un tel filtrage comprend, par exemple, une réduction de bruit optique et/ou d'encodage, un traitement de défaillances (décrites ultérieurement) du dispositif d'acquisition vidéo 4, une correction de flou, une suppression de la contribution de défauts, gouttes d'eau, poussières, etc.

Un tel ajustement de contraste comporte, par exemple, un ajustement de l'exposition, notamment de sorte à ce qu'une zone-témoin de la zone surveillée conserve une luminosité constante au cours du temps. Une telle zone-témoin est, par exemple une portion d'aile. Ceci réduit l'impact des variations de luminosité de l'environnement sur la détection d'anomalies.

Un tel ajustement de couleurs se fonde, par exemple, sur une mire agencée dans le champ de vision de la caméra 8.

Une telle détection de contours consiste en la détection de contours d'objets présents sur chaque image d'intérêt, de préférence après la mise en œuvre du filtrage et/ou de l'ajustement de contraste.

La signature est, par exemple, représentative de contours d'éléments présents sur l'image d'intérêt, par exemple des contours de l'organe surveillé.

Selon un autre exemple, une telle signature est représentative de variations entre images successives dans le temps, notamment dues à l'apparition d'éléments entre images successives, ou encore à des mouvements. Dans ce cas, le dispositif de traitement 6 est, par exemple, configuré pour mettre en œuvre une méthode utilisant des ondelettes ou des approches hiérarchiques pour détecter de telles variations.

A titre d'exemple, le dispositif de traitement 6 est configuré pour générer, à partir de deux images d'intérêt successives, une signature correspondante par une différence entre les deux images d'intérêt. En d'autres termes, la signature est le résultat de la soustraction, pixel par pixel, de la valeur d'un pixel d'une image d'intérêt à la valeur du même pixel de l'autre image d'intérêt.

Le dispositif de traitement 6 est également configuré pour comparer chaque signature obtenue à au moins une signature prédéterminée d'une librairie de signatures.

Une telle librairie est, par exemple, une librairie de défauts. Une telle librairie est, par exemple, mise à jour par apprentissage lors de l'occurrence d'évènements considérés comme des anomalies. Pour cela, un réseau de neurones, éventuellement aidé d'un expert, est susceptible d'être utilisé. Une telle librairie est, par exemple, augmentée, au cours du temps, par les contributions de l'ensemble des aéronefs embarquant le système de surveillance 2.

En outre, le dispositif de traitement 6 est configuré pour générer un signal de détection d'anomalie si le résultat de la comparaison satisfait un critère prédéterminé.

Par exemple, un critère prédéterminé est un degré de similitude supérieur à un seuil prédéterminé entre la signature obtenue et une signature de la bibliothèque.

Un tel signal de détection d'anomalie est, par exemple, destiné à déclencher une alerte.

Selon un autre exemple, un tel signal de détection d'anomalie est utilisé pour la mise à jour de compteurs d'usage, notamment la mise à jour d'un compteur d'usage associé à l'organe surveillé.

Selon encore un autre exemple, un tel signal de détection d'anomalie est utilisé pour le calcul d'un estimateur de sévérité opérationnelle.

Il en résulte qu'un tel signal de détection est susceptible d'être mis en œuvre dans le diagnostic et le pronostic de pannes touchant, notamment, le ou chaque organe surveillé.

De façon avantageuse, le dispositif de traitement 6 est configuré pour établir, à partir du flux vidéo, un diagnostic du dispositif d'acquisition vidéo 4.

Par exemple, le dispositif de traitement 6 est configuré pour, à partir d'au moins une image issue du flux vidéo qui est généré par le dispositif d'acquisition vidéo 4, dite « image témoin », déterminer, en particulier au cours d'une mise en route du système de surveillance 2, un diagnostic portant sur une mise au point et un étalonnage de couleurs du dispositif d'acquisition vidéo 4. Un tel diagnostic est avantageusement réalisé sur la base d'une mire agencée dans le champ de vision de la caméra 8.

En variante, pour un diagnostic sur l'étalonnage des couleurs, notamment sur la balance des blancs, le dispositif de traitement 6 est configuré pour détecter un élément prédéterminé dans l'image témoin, par exemple par l'identification d'un élément prédéterminé (par exemple, une portion prédéterminée de l'organe surveillé), notamment après la mise en œuvre d'une détection de contours, et pour comparer une homogénéité de l'image au niveau dudit élément prédéterminé à un seuil d'homogénéité prédéterminé. La détermination de l'homogénéité met, par exemple, en œuvre un filtre médian.

De préférence, dans ce cas, si l'homogénéité de l'image au niveau de l'élément prédéterminé est supérieure ou égale au seuil d'homogénéité prédéterminé, alors le dispositif de traitement 6 détermine le diagnostic selon lequel une balance des blancs peut être réalisée. Sinon, le dispositif de traitement 6 détermine le diagnostic selon lequel une balance des blancs ne peut pas être réalisée, et, par exemple, utilise, pour le traitement des images d'intérêt, un réglage par défaut ou un réglage précédemment utilisé.

Selon un autre exemple, un tel diagnostic comporte l'évaluation, à partir du résultat de la comparaison d'au moins deux images témoins extraites du flux vidéo, d'un niveau de qualité et/ou d'une défaillance du dispositif d'acquisition vidéo. Une telle évaluation est, par exemple, réalisée au cours d'une phase de croisière de l'aéronef.

Par « niveau de qualité », il est entendu, au sens de la présente demande, une capacité du dispositif d'acquisition vidéo 4 à réaliser une discrimination entre des éléments présents dans le champ de vision de la caméra 8.

De telles défaillances du dispositif d'acquisition vidéo 4 se traduisent notamment par des invariants dans le flux vidéo. De tels invariants sont, par exemple, des pixels morts d'un capteur de la caméra 8, ou encore des salissures d'objectifs de la caméra 8. De tels invariants sont, de préférence, mémorisés dans le dispositif de traitement 6, en particulier pour une mise en œuvre lors de la génération de signatures précédemment décrite.

Le fonctionnement du système de surveillance 2 va maintenant être décrit en référence à la figure 2.

Suite à la mise en route du système de surveillance 2, le dispositif d'acquisition vidéo 4 transmet, à destination du dispositif de traitement 6, un flux vidéo représentatif d'au moins une partie de l'organe surveillé correspondant.

Avantageusement, au cours d'une étape d'initialisation, le dispositif de traitement 6 établit, à partir du flux vidéo, un premier diagnostic 20 du dispositif d'acquisition vidéo 4.

En particulier, le dispositif de traitement 6 détermine un premier diagnostic portant sur la mise au point et/ou l'étalonnage de couleurs (ou la balance des blancs) du dispositif d'acquisition vidéo 4, à partir de l'au moins une image témoin issue du flux vidéo généré par le dispositif d'acquisition vidéo 4.

Notamment, le dispositif de traitement 6 compare l'homogénéité de l'image, au niveau de l'élément prédéterminé, au seuil d'homogénéité prédéterminé, et réalise la balance des blancs sur la base du résultat de la comparaison.

Avantageusement, le dispositif de traitement 6 établit, à partir du flux vidéo, un deuxième diagnostic 22 du dispositif d'acquisition vidéo 4, ultérieur au premier diagnostic, par exemple à plusieurs reprises dans le temps (notamment pendant la phase de croisière de l'aéronef).

En particulier, le dispositif de traitement 6 détermine un deuxième diagnostic comportant l'évaluation, à partir du résultat de la comparaison d'au moins deux images témoins extraites du flux vidéo, du niveau de qualité et/ou d'une défaillance du dispositif d'acquisition vidéo.

Puis, au cours d'une étape d'extraction 24, en cas de détection de la réalisation d'une condition prédéterminée, le dispositif de traitement 6 extrait une séquence d'intérêt du flux vidéo.

Puis, au cours d'une étape d'identification 26, le dispositif de traitement 6 identifie, dans la séquence d'intérêt extraite, au moins une image d'intérêt.

Puis, au cours d'une étape de comparaison 28, le dispositif de traitement 6 compare la signature obtenue à partir de l'au moins une image d'intérêt identifiée à au moins une signature prédéterminée de la librairie de signatures.

De préférence, pour la génération d'une telle signature, le dispositif de traitement 6 applique d'abord, à chaque image d'intérêt, un conditionnement prédéterminé, par exemple un filtrage et/ou un ajustement de contraste et/ou un ajustement de couleurs et/ou une détection de contours. Par exemple, le conditionnement prédéterminé se fonde, au moins en partie, sur le résultat du deuxième diagnostic lorsque celui-ci est mis en œuvre.

Puis, si le résultat de la comparaison satisfait un critère prédéterminé, le dispositif de traitement 6 génère le signal de détection d'anomalie, au cours d'une étape de génération 30 de signal de détection d'anomalie.

En variante, le deuxième diagnostic 22 est susceptible d'être réalisé à tout moment au cours du fonctionnement du système de surveillance 2.

## Revendications

1. Procédé de surveillance d'un organe d'un aéronef, comprenant les étapes :
- réception, en provenance d'un dispositif d'acquisition vidéo, d'un flux vidéo représentatif d'au moins une partie de l'organe, l'organe étant associé à au moins un capteur pour générer, au cours du temps, un signal de mesure représentatif d'un fonctionnement de l'organe, le flux vidéo et chaque signal de mesure étant synchronisés ;
- en cas de détection de la réalisation d'une condition prédéterminée, extraction (24) par un dispositif de traitement (6) d'une partie du flux vidéo pour former une séquence d'intérêt ;
- identification (26) par le dispositif de traitement (6), dans la séquence d'intérêt extraite, d'au moins une image d'intérêt ;
- comparaison (28) par le dispositif de traitement (6) d'une signature, obtenue à partir de chaque image d'intérêt, à au moins une signature prédéterminée d'une librairie de signatures ; et
- génération (30) par le dispositif de traitement (6) d'un signal de détection d'anomalie si le résultat de la comparaison satisfait un critère prédéterminé,
le procédé étant **caractérisé en ce que** la condition prédéterminée est réalisée si, dans le signal de mesure généré par le au moins un capteur, une anomalie est détectée.

2. Procédé de surveillance selon la revendication 1, dans lequel l'étape d'identification comprend un prétraitement destiné à rejeter des images extrapolées du flux vidéo.

3. Procédé de surveillance selon l'une quelconque des revendications 1 et 2, comprenant, en outre, un diagnostic, à partir du flux vidéo, du dispositif d'acquisition vidéo.

4. Procédé de surveillance selon la revendication 3, dans lequel le diagnostic du dispositif d'acquisition vidéo comprend :
- la sélection d'au moins deux images témoins du flux vidéo, séparées dans le temps par une durée prédéterminée ; et
- l'évaluation, à partir du résultat de la comparaison des au moins deux images témoins, d'un niveau de qualité et/ou d'une défaillance du dispositif d'acquisition vidéo.

5. Système de surveillance comprenant un dispositif d'acquisition vidéo (4) et un dispositif de traitement (6), dans lequel
le dispositif d'acquisition vidéo (4) est configuré pour générer un flux vidéo représentatif d'au moins une partie d'un organe à surveiller d'un aéronef, l'organe étant associé à au moins un capteur pour générer, au cours du temps, un signal de mesure représentatif d'un fonctionnement de l'organe, le flux vidéo et chaque signal de mesure étant synchronisés, et
le dispositif de traitement (6) est configuré pour :
- extraire une partie du flux vidéo pour former une séquence d'intérêt, en cas de détection de la réalisation d'une condition prédéterminée ;
- identifier, dans la séquence d'intérêt extraite, au moins une image d'intérêt ;
- comparer une signature, obtenue à partir de l'au moins une image d'intérêt, à au moins une signature prédéterminée d'une librairie de signatures ; et
- générer d'un signal de détection d'anomalie si le résultat de la comparaison satisfait un critère prédéterminé, le système étant **caractérisé en ce que** la condition prédéterminée est réalisée si, dans le signal de mesure généré par le au moins un capteur, une anomalie est détectée.

6. Produit programme d'ordinateur comportant des instructions de code de programme qui, lorsqu'elles sont exécutées par un ordinateur, mettent en œuvre le procédé selon l'une quelconque des revendications 1 à 4 dans un système selon la revendication 5.

7. Aéronef embarquant un système de surveillance (2) selon la revendication 5.

## Patentansprüche

1. Verfahren zum Überwachen eines Bauteils eines Flugzeugs, das die folgenden Schritte umfasst:
- Empfangen eines Videostreams, der mindestens einen Teil des Bauteils darstellt, von einer Videoerfassungsvorrichtung, wobei das Bauteil mit mindestens einem Sensor verbunden ist, um im Laufe der Zeit ein Messsignal zu erzeugen, das einen Betrieb des Bauteils darstellt, wobei der Videostream und jedes Messsignal synchronisiert sind;
- im Falle des Detektierens der Erfüllung einer vorbestimmten Bedingung, Extrahieren (24) eines Teils des Videostreams durch eine Verarbeitungsvorrichtung (6), um eine Sequenz von Interesse zu bilden;
- Identifizieren (26) mindestens eines Bilds von Interesse in der extrahierten Sequenz von Interesse durch die Verarbeitungsvorrichtung (6);
- Vergleichen (28) einer von jedem Bild von Interesse erhaltenen Signatur mit mindestens einer vorbestimmten Signatur aus einer Signaturbibliothek durch die Verarbeitungsvorrichtung (6); und
- Erzeugen (30) eines Anomalie-Detektionssignals durch die Verarbeitungsvorrichtung (6), wenn das Ergebnis des Vergleichs ein vorbestimmtes Kriterium erfüllt,
wobei das Verfahren **dadurch gekennzeichnet ist, dass** die vorbestimmte Bedingung erfüllt ist, wenn eine Anomalie im von dem mindestens einen Sensor erzeugten Messsignal detektiert wurde.

2. Überwachungsverfahren nach Anspruch 1, wobei der Identifizierungsschritt eine Vorverarbeitung umfasst, die dazu bestimmt ist, extrapolierte Bilder aus dem Videostream zu verwerfen.

3. Überwachungsverfahren nach einem der Ansprüche 1 und 2, das ferner eine auf dem Videostream basierende Diagnose der Videoerfassungsvorrichtung umfasst.

4. Überwachungsverfahren nach Anspruch 3, wobei die Diagnose der Videoerfassungsvorrichtung Folgendes umfasst:
- Auswählen von mindestens zwei Kontrollbildern aus dem Videostream, die zeitlich durch einen vorbestimmten Zeitraum getrennt sind; und
- Bewerten eines Qualitätsniveaus und/oder einer Fehlfunktion der Videoerfassungsvorrichtung basierend auf dem Ergebnis des Vergleichs der mindestens zwei Kontrollbilder.

5. Überwachungssystem, das eine Videoerfassungsvorrichtung (4) und eine Verarbeitungsvorrichtung (6) umfasst, wobei
die Videoerfassungsvorrichtung (4) dazu konfiguriert ist, einen Videostream zu erzeugen, der zumindest einen Teil eines zu überwachenden Bauteils eines Flugzeugs darstellt, wobei das Bauteil mit mindestens einem Sensor verbunden ist, um im Laufe der Zeit ein Messsignal zu erzeugen, das einen Betrieb des Bauteils darstellt, wobei der Videostream und jedes Messsignal synchronisiert sind, und
die Verarbeitungsvorrichtung (6) für Folgendes konfiguriert ist:
- Extrahieren eines Teils des Videostreams, um eine Sequenz von Interesse zu bilden, im Falle des Detektierens der Erfüllung einer vorbestimmten Bedingung;
- Identifizieren mindestens eines Bilds von Interesse in der extrahierten Sequenz von Interesse;
- Vergleichen einer von dem mindestens einen Bild von Interesse erhaltenen Signatur mit mindestens einer vorbestimmten Signatur aus einer Signaturbibliothek; und
- Erzeugen eines Anomalie-Detektionssignals, wenn das Ergebnis des Vergleichs ein vorbestimmtes Kriterium erfüllt,
wobei das System **dadurch gekennzeichnet ist, dass** die vorbestimmte Bedingung erfüllt ist, wenn eine Anomalie im von dem mindestens einen Sensor erzeugten Messsignal detektiert wurde.

6. Computerprogrammprodukt, das Programmcodeanweisungen umfasst, die, wenn sie von einem Computer ausgeführt werden, das Verfahren nach einem der Ansprüche 1 bis 4 in einem System nach Anspruch 5 implementieren.

7. Flugzeug, das mit einem Überwachungssystem (2) nach Anspruch 5 ausgestattet ist.

## Claims

1. Method for monitoring a component of an aircraft, comprising the steps of:
- receiving, from a video acquisition device, a video stream representative of at least a part of the component, the component being associated with at least one sensor to generate, over time, a measurement signal representative of an operation of the component, the video stream and each measurement signal being synchronized;
- upon detection of the occurrence of a predetermined condition, extracting (24) by a processing device (6) a portion of the video stream to form a sequence of interest;
- identifying (26) by the processing device (6), in the extracted sequence of interest, at least one image of interest;
- comparing (28) by the processing device (6) a signature, obtained from each image of interest, with at least one predetermined signature from a library of signatures; and
- generating (30) by the processing device (6) an anomaly detection signal if the result of the comparison satisfies a predetermined criterion,
the method being **characterised in that** the predetermined condition is met if an anomaly is detected in the measurement signal generated by the at least one sensor.

2. Monitoring method according to claim 1, wherein the identification step includes preprocessing aimed at rejecting extrapolated images from the video stream.

3. Monitoring method according to any one of claims 1 and 2, further comprising a diagnosis of the video acquisition device based on the video stream.

4. Monitoring method according to claim 3, wherein the diagnosis of the video acquisition device comprises:
- selecting at least two reference images from the video stream, separated in time by a predetermined duration; and
- evaluating, based on the result of the comparison of the at least two reference images, a quality level and/or a malfunction of the video acquisition device.

5. Monitoring system comprising a video acquisition device (4) and a processing device (6), wherein the video acquisition device (4) is configured to generate a video stream representative of at least a part of a component to be monitored of an aircraft, the component being associated with at least one sensor to generate, over time, a measurement signal representative of an operation of the component, the video stream and each measurement signal being synchronized;
and the processing device (6) is configured to:
- extract a portion of the video stream to form a sequence of interest upon detection of the occurrence of a predetermined condition;
- identify, in the extracted sequence of interest, at least one image of interest;
- compare a signature, obtained from the at least one image of interest, with at least one predetermined signature from a library of signatures; and
- generate an anomaly detection signal if the result of the comparison satisfies a predetermined criterion;
the system being **characterized in that** the predetermined condition is met if an anomaly is detected in the measurement signal generated by at least one sensor.

6. Computer program product comprising program code instructions which, when executed by a computer, implement the method according to any one of claims 1 to 4, in a system according to claim 5.

7. Aircraft carrying a monitoring system (2) according to claim 6.
